# EUROPEAN PATENT APPLICATION

(11) **EP 4 764 949 A1**
(43) Date of publication of application: **24.06.2026**
(21) Application number: 25219325.5
(22) Date of filing: 28.11.2025
(51) Int. Cl.: G06N 3/0442, G06N 3/0455, G06N 3/0475, G06F 40/10, G06F 40/30

(54) **METHOD AND SYSTEM FOR COGNITIVE TRANSFORMATION OF DATA INTO HUMAN-PERCEPTIONS**

(30) Priority: 23.12.2024 IN 202421102151
(71) Applicant: Tata Consultancy Services Limited, Maharashtra (IN)
(72) Inventor: SIVAKUMAR, Narendran, Guildford, SW1X 7HS (GB); VISWANATHAN, Sankaranarayanan, 600113 Chennai, Tamil Nadu, (IN); AMIR, Nimra, London, EC2N 4BQ (GB); RAMASAMY VENKADA, Subramanian, 560066 Bangalore, Karnataka (IN); KANNAN, Radhika, 600113 Chennai, Tamil Nadu (IN)
(74) Representative: Goddar, Heinz J.

(57) **Abstract**

One of the primary challenges in the current data analysis landscape is the ability to efficiently capture and simplify complex datasets. A one-size-fits-all approach to data transformation is often ineffective, as it fails to accommodate the diverse needs and styles of different users. Embodiments disclosed herein provide a method and system for cognitive transformation of data into human-perceptions. In this approach, during data processing, the system reasons through impact of removing one or more data points in the summarized information by simulating removal of each of the one or more data points evaluating changes in remaining data's semantic integrity. Further, the summarized information is modified by fitting a new set of requirements to adapt the summarized information for one or more applications, while taking into consideration semantic integrity of the data.

## Description

### CROSS-REFERENCE TO RELATED APPLICATIONS AND PRIORITY

The present application claims priority to Indian application no. 202421102151, filed on December 23,2024.

### TECHNICAL FIELD

The disclosure herein generally relates to data processing, and, more particularly, to a method and system for cognitive transformation of data into human-perceptions.

### BACKGROUND

One of the primary challenges in the current data analysis landscape is the ability to efficiently capture and simplify complex datasets. Knowledge workers often face the daunting task of deciphering vast amounts of unstructured data, which can hinder their ability to make prompt and accurate decisions. The traditional data processing tools do not align with the cognitive perceptions of human operators, often making data interpretation a cumbersome and error-prone process. Different knowledge workers have unique workflows and interact with data in various ways, depending on their specific roles, industries, and personal preferences. A one-size-fits-all approach to data transformation is often ineffective, as it fails to accommodate the diverse needs and styles of different users.

### SUMMARY

Embodiments of the present disclosure present technological improvements as solutions to one or more of the above-mentioned technical problems recognized by the inventors in conventional systems. For example, in one embodiment, a processor implemented method is provided. The method includes: obtaining, via one or more hardware processors, raw data as input, wherein size of the raw data is limited to a pre-defined size limit; merging, via the one or more hardware processors, the raw data with one or more additional data sources to obtain a merged dataset; and processing, via the one or more hardware processors, the merged dataset, comprising: identifying and filling missing data in the merged dataset to obtain an imputed dataset; deriving at least a part of the imputed dataset as a relevant information, based on a defined criteria, wherein the relevant information represents data that is relevant with respect to the defined criteria; summarizing the relevant information to generate a summarized information; pruning the summarized information to remove one or more redundant data present in the summarized information, wherein performing the pruning comprises reasoning through impact of removing one or more data points in the summarized information by simulating removal of each of the one or more data points evaluating changes in remaining data's semantic integrity; and modifying the summarized information after performing the pruning, to generate a modified summarized information, wherein modifying the summarized information comprises fitting a new set of requirements to adapt the summarized information for one or more applications.

In an aspect of the method, a search criteria based search is performed within the modified summarized information to obtain a required information, by: decomposing the search criteria into a plurality of sub-goals using a Chain of Thought (CoT) reasoning; performing a multi-step search based on the plurality of sub-goals using a recursive attention mechanism, wherein each of a plurality of search steps in the multi-step search narrows down an associated search space by filtering data based on an obtained intermediate result, and wherein the recursive attention mechanism ensures that each search step focuses on progressively refined data segments; and consolidating and validating search result obtained across the plurality of search steps.

In another aspect of the method, merging the raw data with one or more additional data sources to obtain the merged dataset includes: dividing the raw data and data extracted from the one or more additional data sources into a first set of data chunks; generating a first set of context embeddings from the first set of data chunks; combining data across the first set of context embeddings by a cross-attention mechanism to obtain a second set of context embeddings using a plurality of attention heads in a first transformer, wherein the first transformer focuses on a plurality of different semantic aspects of the first set of data chunks; performing a Chain of Thought (CoT) reasoning over the second set of context embeddings to obtain a third set of context embeddings, wherein the CoT reasoning refines one or more common themes in the second set of context embeddings; penalizing all inconsistencies, if found in the third set of context embeddings, by using a coherence modeling layer in the first transformer; and obtaining the merged dataset from an output layer of the first transformer using the third set of context embeddings.

In another aspect of the method, identifying and filling the missing data includes: detecting one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas; generating a plurality of hypotheses via a multi-pass attention mechanism, where each pass from among a plurality of passes in the multi-pass attention mechanism attempts to infer what is missing based on a plurality of different context slices; selecting a hypothesis among the plurality of hypotheses using a SoftMax layer, wherein the selected hypothesis has highest contextual relevance among the plurality of hypotheses; and generating the missing information using a generative model based on the selected hypothesis.

In another aspect of the method, at least the part of the imputed dataset is derived as the relevant information, by: initializing a guided attention based on the defined criteria; applying a Chain of Thought (CoT) reasoning to decompose the defined criteria and derive the relevant information using a multi-stage forward pass through the attention mechanism, wherein each stage focuses on refining a specific aspect of the defined criteria, and wherein each pass generates an intermediate representation that influences a next stage.

In another aspect of the method, summarizing the relevant information to generate the summarized information includes: compressing the relevant information to maintain a plurality of key points by using a plurality of attention layers, wherein each layer focuses on a different level of abstraction; generating a step wise summary by a series of forward passes through the first transformer, with each pass focuses on retaining a plurality of critical points and discarding data classified as non-essential information; checking for coherence and completeness of the generated step wise summary; and dynamically adjusting length and detail level of the generated step wise summary based on one or more user input parameters.

In another aspect of the method, modifying the summarized information includes: performing simultaneously, a structural analysis and a semantic analysis, of the summarized information to obtain a target structure and related semantics; decomposing the target structure and the related semantics into a plurality of transformation steps using a Chain of Thought (CoT) reasoning; applying the plurality of transformation steps on the summarized information, wherein at each step, it is assessed whether the transformed data aligns with the target structure while preserving a related original meaning; generating a rewritten data conditioned on the target structure and the related semantics, after applying the plurality of transformation steps, using a T5-based architecture; and validating the generated rewritten data.

In another aspect, a system is provided. The system includes one or more hardware processors, a communication interface, and a memory storing a plurality of instructions. The plurality of instructions which when executed, cause the one or more hardware processors to: obtain raw data as input, wherein size of the raw data is limited to a pre-defined size limit; merge the raw data with one or more additional data sources to obtain a merged dataset; and process the merged dataset, by: identifying and filling missing data in the merged dataset to obtain an imputed dataset; deriving at least a part of the imputed dataset as a relevant information, based on a defined criteria, wherein the relevant information represents data that is relevant with respect to the defined criteria; summarizing the relevant information to generate a summarized information; pruning the summarized information to remove one or more redundant data present in the summarized information, wherein performing the pruning comprises reasoning through impact of removing one or more data points in the summarized information by simulating removal of each of the one or more data points evaluating changes in remaining data's semantic integrity; and modifying the summarized information after performing the pruning, to generate a modified summarized information, wherein modifying the summarized information comprises fitting a new set of requirements to adapt the summarized information for one or more applications.

In an aspect of the system, the one or more hardware processors are configured to perform a search criteria based search within the modified summarized information to obtain a required information, by: decomposing the search criteria into a plurality of sub-goals using a Chain of Thought (CoT) reasoning; performing a multi-step search based on the plurality of sub-goals using a recursive attention mechanism, wherein each of a plurality of search steps in the multi-step search narrows down an associated search space by filtering data based on an obtained intermediate result, and wherein the recursive attention mechanism ensures that each search step focuses on progressively refined data segments; and consolidating and validating search result obtained across the plurality of search steps.

In another aspect of the system, the one or more hardware processors are configured to merge the raw data with one or more additional data sources to obtain the merged dataset, by: dividing the raw data and data extracted from the one or more additional data sources into a first set of data chunks; generating a first set of context embeddings from the first set of data chunks; combining data across the first set of context embeddings by a cross-attention mechanism to obtain a second set of context embeddings using a plurality of attention heads in a first transformer, wherein the first transformer focuses on a plurality of different semantic aspects of the first set of data chunks; performing a Chain of Thought (CoT) reasoning over the second set of context embeddings to obtain a third set of context embeddings, wherein the CoT reasoning refines one or more common themes in the second set of context embeddings; penalizing all inconsistencies, if found in the third set of context embeddings, by using a coherence modeling layer in the first transformer; and obtaining the merged dataset from an output layer of the first transformer using the third set of context embeddings.

In another aspect of the system, the one or more hardware processors are configured to identify and fill the missing data by: detecting one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas; generating a plurality of hypotheses via a multi-pass attention mechanism, where each pass from among a plurality of passes in the multi-pass attention mechanism attempts to infer what is missing based on a plurality of different context slices; selecting a hypothesis among the plurality of hypotheses using a SoftMax layer, wherein the selected hypothesis has highest contextual relevance among the plurality of hypotheses; and generating the missing information using a generative model based on the selected hypothesis.

In another aspect of the system, the one or more hardware processors are configured to derive at least the part of the imputed dataset as the relevant information, by: initializing a guided attention based on the defined criteria; applying a Chain of Thought (CoT) reasoning to decompose the defined criteria and derive the relevant information using a multi-stage forward pass through the attention mechanism, wherein each stage focuses on refining a specific aspect of the defined criteria, and wherein each pass generates an intermediate representation that influences a next stage.

In another aspect of the system, the one or more hardware processors are configured to summarize the relevant information to generate the summarized information, by: compressing the relevant information to maintain a plurality of key points by using a plurality of attention layers, wherein each layer focuses on a different level of abstraction; generating a step wise summary by a series of forward passes through the first transformer, with each pass focuses on retaining a plurality of critical points and discarding data classified as non-essential information; checking for coherence and completeness of the generated step wise summary; and dynamically adjusting length and detail level of the generated step wise summary based on one or more user input parameters.

In another aspect of the system, the one or more hardware processors are configured to modify the summarized information, by: performing simultaneously, a structural analysis and a semantic analysis, of the summarized information to obtain a target structure and related semantics; decomposing the target structure and the related semantics into a plurality of transformation steps using a Chain of Thought (CoT) reasoning; applying the plurality of transformation steps on the summarized information, wherein at each step, it is assessed whether the transformed data aligns with the target structure while preserving a related original meaning; generating a rewritten data conditioned on the target structure and the related semantics, after applying the plurality of transformation steps, using a T5-based architecture; and validating the generated rewritten data.

In yet another aspect, a non-transitory computer readable medium is provided. The non-transitory computer readable medium includes a plurality of instructions which when executed cause one or more hardware processors to: obtain raw data as input, wherein size of the raw data is limited to a pre-defined size limit; merge the raw data with one or more additional data sources to obtain a merged dataset; and process the merged dataset, by: identifying and filling missing data in the merged dataset to obtain an imputed dataset; deriving at least a part of the imputed dataset as a relevant information, based on a defined criteria, wherein the relevant information represents data that is relevant with respect to the defined criteria; summarizing the relevant information to generate a summarized information; pruning the summarized information to remove one or more redundant data present in the summarized information, wherein performing the pruning comprises reasoning through impact of removing one or more data points in the summarized information by simulating removal of each of the one or more data points evaluating changes in remaining data's semantic integrity; and modifying the summarized information after performing the pruning, to generate a modified summarized information, wherein modifying the summarized information comprises fitting a new set of requirements to adapt the summarized information for one or more applications.

In an aspect of the non-transitory computer readable medium, the one or more hardware processors are configured to perform a search criteria based search within the modified summarized information to obtain a required information, by: decomposing the search criteria into a plurality of sub-goals using a Chain of Thought (CoT) reasoning; performing a multi-step search based on the plurality of sub-goals using a recursive attention mechanism, wherein each of a plurality of search steps in the multi-step search narrows down an associated search space by filtering data based on an obtained intermediate result, and wherein the recursive attention mechanism ensures that each search step focuses on progressively refined data segments; and consolidating and validating search result obtained across the plurality of search steps.

In another aspect of the non-transitory computer readable medium, the one or more hardware processors are configured to merge the raw data with one or more additional data sources to obtain the merged dataset, by: dividing the raw data and data extracted from the one or more additional data sources into a first set of data chunks; generating a first set of context embeddings from the first set of data chunks; combining data across the first set of context embeddings by a cross-attention mechanism to obtain a second set of context embeddings using a plurality of attention heads in a first transformer, wherein the first transformer focuses on a plurality of different semantic aspects of the first set of data chunks; performing a Chain of Thought (CoT) reasoning over the second set of context embeddings to obtain a third set of context embeddings, wherein the CoT reasoning refines one or more common themes in the second set of context embeddings; penalizing all inconsistencies, if found in the third set of context embeddings, by using a coherence modeling layer in the first transformer; and obtaining the merged dataset from an output layer of the first transformer using the third set of context embeddings.

In another aspect of the non-transitory computer readable medium, the one or more hardware processors are configured to identify and fill the missing data by: detecting one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas; generating a plurality of hypotheses via a multi-pass attention mechanism, where each pass from among a plurality of passes in the multi-pass attention mechanism attempts to infer what is missing based on a plurality of different context slices; selecting a hypothesis among the plurality of hypotheses using a SoftMax layer, wherein the selected hypothesis has highest contextual relevance among the plurality of hypotheses; and generating the missing information using a generative model based on the selected hypothesis.

In another aspect of the non-transitory computer readable medium, the one or more hardware processors are configured to derive at least the part of the imputed dataset as the relevant information, by: initializing a guided attention based on the defined criteria; applying a Chain of Thought (CoT) reasoning to decompose the defined criteria and derive the relevant information using a multi-stage forward pass through the attention mechanism, wherein each stage focuses on refining a specific aspect of the defined criteria, and wherein each pass generates an intermediate representation that influences a next stage.

In another aspect of the non-transitory computer readable medium, the one or more hardware processors are configured to summarize the relevant information to generate the summarized information, by: compressing the relevant information to maintain a plurality of key points by using a plurality of attention layers, wherein each layer focuses on a different level of abstraction; generating a step wise summary by a series of forward passes through the first transformer, with each pass focuses on retaining a plurality of critical points and discarding data classified as non-essential information; checking for coherence and completeness of the generated step wise summary; and dynamically adjusting length and detail level of the generated step wise summary based on one or more user input parameters.

In another aspect of the non-transitory computer readable medium, the one or more hardware processors are configured to modify the summarized information, by: performing simultaneously, a structural analysis and a semantic analysis, of the summarized information to obtain a target structure and related semantics; decomposing the target structure and the related semantics into a plurality of transformation steps using a Chain of Thought (CoT) reasoning; applying the plurality of transformation steps on the summarized information, wherein at each step, it is assessed whether the transformed data aligns with the target structure while preserving a related original meaning; generating a rewritten data conditioned on the target structure and the related semantics, after applying the plurality of transformation steps, using a T5-based architecture; and validating the generated rewritten data.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A illustrates an exemplary system for cognitive transformation of data, according to some embodiments of the present disclosure.
FIG. 2 is a flow diagram depicting steps involved in the process of cognitive transformation of data, using the system of FIG. 1A, according to some embodiments of the present disclosure.
FIG. 3 is a flow diagram depicting steps involved in the process of performing a search criteria based search, using the system of FIG. 1A, according to some embodiments of the present disclosure.
FIG. 4 is a flow diagram depicting steps involved in the process of merging a raw data with one or more additional data sources to obtain a merged dataset, using the system of FIG. 1A, according to some embodiments of the present disclosure.
FIG. 5 is a flow diagram depicting steps involved in the process of identifying and filling missing data, using the system of FIG. 1A, according to some embodiments of the present disclosure.
FIG. 6 is a flow diagram depicting steps involved in the process of deriving at least a part of an imputed dataset as relevant information, using the system of FIG. 1A, according to some embodiments of the present disclosure.
FIG. 7 is a flow diagram depicting steps involved in the process of summarizing the relevant information to generate a summarized information, using the system of FIG. 1A, according to some embodiments of the present disclosure.
FIG. 8 is a flow diagram depicting steps involved in the process of modifying the summarized information, using the system of FIG. 1A, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

One of the primary challenges in the current data analysis landscape is the ability to efficiently capture and simplify complex datasets. Knowledge workers often face the daunting task of deciphering vast amounts of unstructured data, which can hinder their ability to make prompt and accurate decisions. The traditional data processing tools do not align with the cognitive perceptions of human operators, often making data interpretation a cumbersome and error-prone process. Different knowledge workers have unique workflows and interact with data in various ways, depending on their specific roles, industries, and personal preferences. A one-size-fits-all approach to data transformation is often ineffective, as it fails to accommodate the diverse needs and styles of different users.

To address these challenges, embodiments disclosed herein provide a method and system for cognitive transformation of data into human-perceptions. In this approach, the system obtains a raw data as input, wherein size of the raw data is limited to a pre-defined size limit. Further, the raw data is merged with one or more additional data sources to obtain a merged dataset. Further, the merged dataset is processed. Processing of the merged dataset includes the following steps. In this process, missing data in the merged dataset are identified and filled to obtain an imputed dataset. Further, at least a part of the imputed dataset is derived as a relevant information, based on a defined criteria, wherein the relevant information represents data that is relevant with respect to the defined criteria. Further, the relevant information is summarized to generate a summarized information. Further, the summarized information is pruned to remove one or more redundant data present in the summarized information. Performing the pruning comprises reasoning through impact of removing one or more data points in the summarized information by simulating removal of each of the one or more data points evaluating changes in remaining data's semantic integrity. Further, the summarized information is modified after performing the pruning, to generate a modified summarized information, wherein modifying the summarized information comprises fitting a new set of requirements to adapt the summarized information for one or more applications. This approach addresses the aforementioned challenges of the existing approaches by considering semantic integrity of data while performing the data transformation.

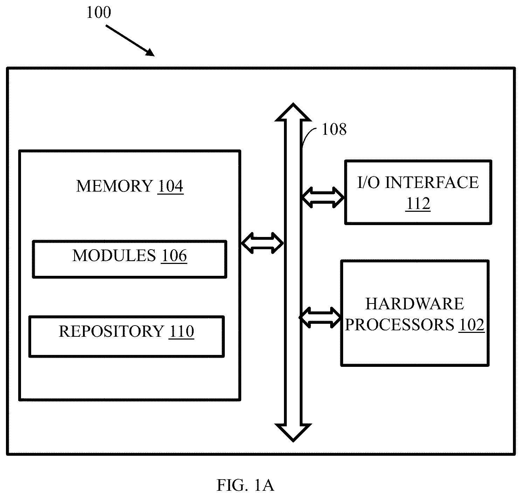

Referring now to the drawings, and more particularly to FIG. 1A through FIG. 8, where similar reference characters denote corresponding features consistently throughout the figures, there are shown preferred embodiments and these embodiments are described in the context of the following exemplary system and/or method.

FIG. 1A illustrates an exemplary system for cognitive transformation of data, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of cognitive transformation of data, being performed by the system of FIG. 1A. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the cognitive transformation of data.

The data repository (or repository) 110 may include a plurality of abstracted piece of code for refinement and data that is processed, received, or generated as a result of the execution of the plurality of modules in the module(s) 106.

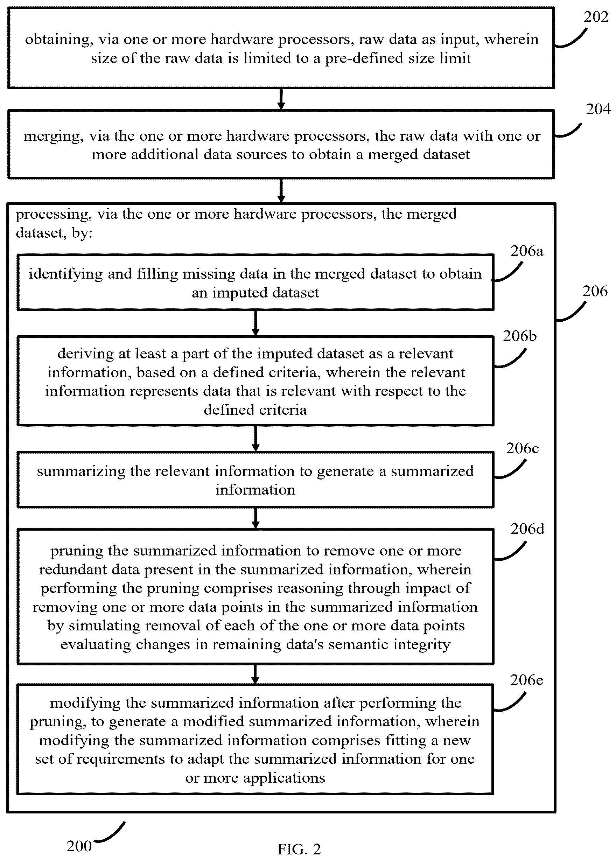

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 through FIG. 8.

FIG. 2 is a flow diagram depicting steps involved in the process of cognitive transformation of data, using the system of FIG. 1A, according to some embodiments of the present disclosure. In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1A, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 in FIG. 2, the system 100 obtains, via the one or more hardware processors 102, a raw data as input. Size of the raw data is limited to a pre-defined size limit. Obtaining the raw data as input with a pre-defined size limit means that the system 100 collects unprocessed data but restricts the volume of data collected, which helps avoid system overload, in turn allowing balancing of data intake with the system's 100 processing and storage capabilities. This size limit can vary based on various system constraints, type of data, and use case requirements. Some examples of the raw data are given below:
- Text Data: If the raw data is a collection of documents, the system 100 may limit each document to 10,000 characters. This ensures that only manageable-sized documents are processed at a time, making it easier to analyze without memory issues.
- Sensor Data: If the system 100 is collecting real-time data from sensors, such as temperature readings, the pre-defined size limit might restrict data to 1 hours' worth of readings at a time. This helps in batch processing without delay or overflow.
- Social Media Data: If the system 100 is collecting social media data such as but not limited to tweets, the system 100 might limit the size of the raw data to the last 1000 tweets containing a particular hashtag. This prevents the system 100 from analyzing too much data at once, which could slow down real-time insights.
- Financial Transactions: For analyzing financial transaction related data, such as purchase data, the system 100 may set a limit of 5000 transactions to be processed per batch. This allows for sequential analysis without overwhelming the system's capacity.

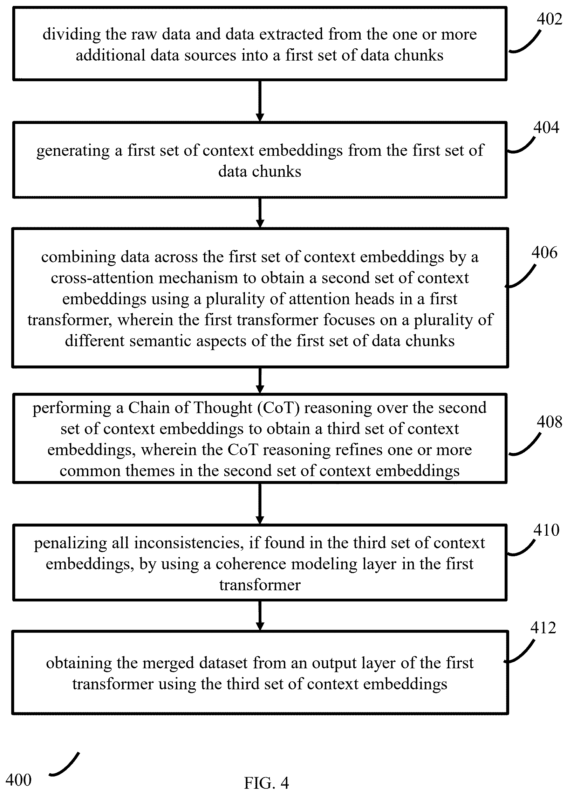

Further, at step 204 of the method 200, the system 100 merges, via the one or more hardware processors 102, the raw data with one or more additional data sources to obtain a merged dataset. The merging of the raw data with the one or more additional data sources is done to overcome data siloes enforced by normalized databases. Invariably the raw data, which maybe from enterprises, are normalized (for example, using a 3^{rd} degree normalization) to ensure that data is broken into fewer columns. This is done to ensure better database and query performance. The siloed data is not useful in this case as the full meaning of the data is lost in the splits, unless they are merged. Various steps involved in the process of obtaining the merged dataset are depicted in method 400 in FIG. 4, and are explained hereafter. At step 402 of the method 400, the system 100 divides the raw data and data extracted from the one or more additional data sources into a first set of data chunks. In an embodiment, the data is divided based on pre-defined chunk sizes or natural data boundaries, such as paragraphs in text or intervals in time series data. The choice depends on the data type and size constraints, aiming to maintain contextual integrity within each chunk. For example, in a document being processed, each paragraph might be treated as a chunk. For a time series data, chunks might represent 5-minute intervals. Further, at step 404 of the method 400, the system 100 generates a first set of context embeddings from the first set of data chunks. Each contextual embedding is a vector that captures semantic aspects relevant to the chunk's content, allowing contextual processing of data. The contextual embeddings are created by feeding data chunks into a model, like a transformer, which learns to encode both the individual data features and their relationships. These embeddings represent the meaning of data within each chunk. Further, at step 406 of the method 400, the system 100 combines data across the first set of context embeddings by a cross-attention mechanism to obtain a second set of context embeddings using a plurality of attention heads in a first transformer. The cross-attention mechanism uses a multi-head attention layer from an associated transformer architecture, which applies embeddings from different data chunks. This mechanism uses 12 to 16 attention heads for parallel processing of attention across different semantic features, and further facilitates a contextual integration where each attention head learns to focus on different semantic aspects, combining information across chunks. The first transformer focuses on a plurality of different semantic aspects of the first set of data chunks. Further, at step 408 of the method 400, the system 100 performs a Chain of Thought (CoT) reasoning over the second set of context embeddings to obtain a third set of context embeddings. The CoT reasoning refines one or more common themes in the second set of context embeddings. The CoT reasoning breaks down complex queries or tasks into smaller, logical sub-steps. This is a layered approach which helps the system 100 focus on a specific aspect of data at each step, refining the result progressively. The CoT reasoning is implemented as multi-stage reasoning layers within attention mechanisms, where each layer/stage addresses a sub-goal. These stages are sequenced to influence each other, ensuring the final output integrates all sub-aspects cohesively. Further, at step 410 of the method 400, the system 100 penalizes all inconsistencies, if found in the third set of context embeddings, by using a coherence modeling layer in the first transformer. Further, at step 412 of the method 400, the system 100 obtains the merged dataset from an output layer of the first transformer using the third set of context embeddings.

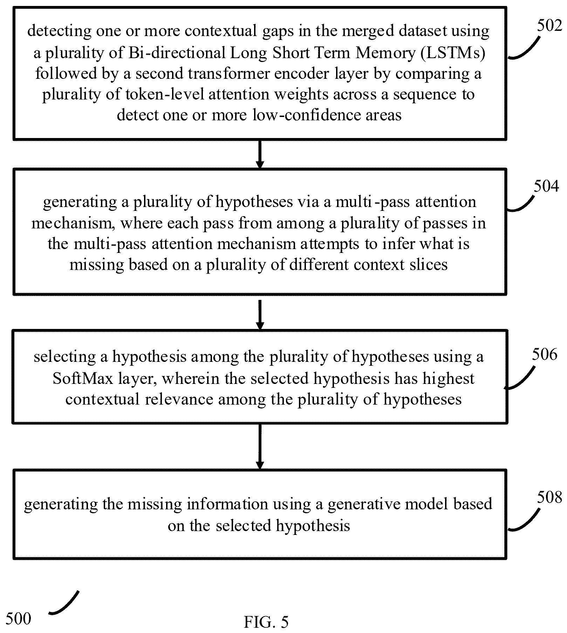

Further, at step 206 of the method 200, the system 100 processes, via the one or more hardware processors 102, the merged dataset. Various steps involved in the process of the merged dataset are depicted in steps 206a through 206e. At step 206a, the system 100 identifies and fills missing data in the merged dataset to obtain an imputed dataset. Various steps involved in the process of identifying and filling the missing data are depicted in method 500 in FIG. 5, and are explained hereafter. At step 502 of the method 500, the system 100 detects one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas. Further, at step 504 of the method 500, the system 100 generates a plurality of hypotheses via a multi-pass attention mechanism. The hypotheses are generated by the system 100 using a multi-pass attention mechanism. Each of a plurality of passes in the multi-pass attention mechanism examines a different "slice" of context within the data to propose plausible missing information. For example: In filling a gap in a sentence like "The cat __ on the mat," different hypotheses could include "sat," "jumped," or "slept," each based on different contextual inferences. Each pass from among a plurality of passes in the multi-pass attention mechanism attempts to infer what is missing based on a plurality of different context slices. Further, at step 506 of the method 500, the system 100 selects a hypothesis among the plurality of hypotheses using a SoftMax layer, wherein the selected hypothesis has highest contextual relevance among the plurality of hypotheses. The system 100 may use a SoftMax layer to assign probabilities to each hypothesis based on its alignment with the surrounding context. Then the hypothesis with the highest probability, in terms of contextual relevance, is selected. Further, at step 508 of the method 500, the system 100 generates the missing information using a generative model based on the selected hypothesis.

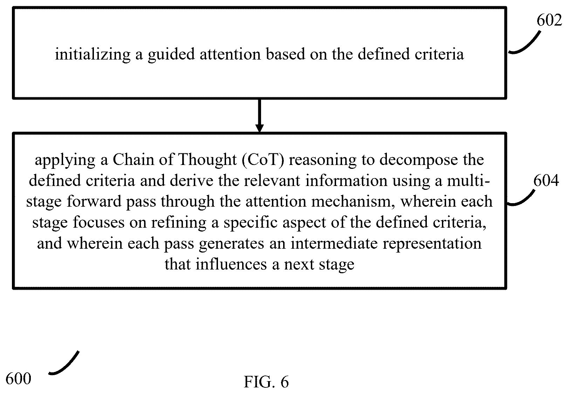

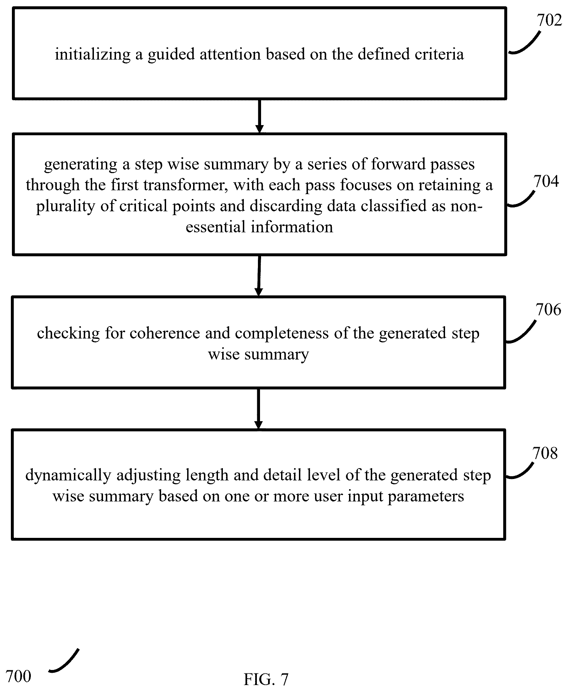

Further, at step 206b, the system 100 derives at least a part of the imputed dataset as a relevant information, based on a defined criteria, wherein the relevant information represents data that is relevant with respect to the defined criteria. Steps involved in the process of deriving at least the part of the imputed dataset as the relevant information are depicted in method 600 in FIG. 6, and are explained hereafter. At step 602 of the method 600, the system 100 initializes a guided attention based on the defined criteria. The guided attention mechanism uses a Multi-layer attention technique where the key-value pairs are informed by user-specified criteria. The guided mechanism uses attention weights that are initialized based on the relevance of data segments to the user-defined criteria. Further, at step 604 of the method 600, the system 100 applies the Chain of Thought (CoT) reasoning to decompose the defined criteria and derive the relevant information using a multi-stage forward pass through the attention mechanism, where each stage focuses on refining a specific aspect of the defined criteria, and wherein each pass generates an intermediate representation that influences a next stage. Further, at step 206c, the system 100 summarizes the relevant information to generate a summarized information. Various steps involved in the process of summarizing the relevant information are depicted in method 700 in FIG. 7, and are explained hereafter. At step 702 of the method 700, the system 100 compresses the relevant information to maintain a plurality of key points by using a plurality of attention layers, wherein each layer focuses on a different level of abstraction. Further, at step 704 of the method 700, the system 100 generates a step wise summary by a series of forward passes through the first transformer, with each pass focuses on retaining a plurality of critical points and discarding data classified as non-essential information. Further, at step 706 of the method 700, the system 100 checks for coherence and completeness of the generated step wise summary. The coherence is checked by evaluating logical flow and semantic integrity using one or more attention-based validation layers, which review if the summary captures key points accurately. The completeness ensures that all important information is included without contradictions. Further, at step 708 of the method 700, the system 100 dynamically adjusts length and detail level of the generated step wise summary based on one or more user input parameters. The user input parameters may include, but not limited to, required detail level or specific topics, guide the system 100 to expand or condense sections accordingly. For example, if a user requests a brief summary, the system 100 may prioritize high-level insights, whereas, for a detailed summary, the system 100 retains finer details and explanations within each section.

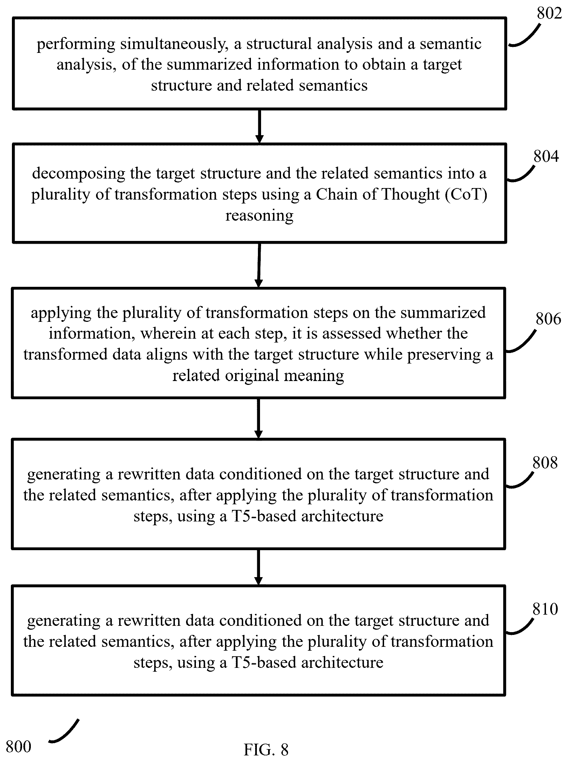

Further, at step 206d, the system 100 prunes the summarized information to remove one or more redundant data present in the summarized information. Performing the pruning comprises reasoning through impact of removing one or more data points in the summarized information by simulating removal of each of the one or more data points evaluating changes in remaining data's semantic integrity. Further, at step 206e, the system 100 modifies the summarized information after performing the pruning, to generate a modified summarized information. Modifying the summarized information comprises fitting a new set of requirements to adapt the summarized information for one or more applications. Various steps in the process of modifying the summarized information are depicted in method 800 in FIG. 8, and are explained hereafter. At step 802 of the method 800, the system 100 performs simultaneously, a structural analysis and a semantic analysis of the summarized information to obtain a target structure and related semantics. Further, at step 804 of the method 800, the system 100 decomposes the target structure and the related semantics into a plurality of transformation steps using the Chain of Thought (CoT) reasoning. Further, at step 806 of the method 800, the system 100 applies the plurality of transformation steps on the summarized information, wherein at each step, it is assessed whether the transformed data aligns with the target structure while preserving a related original meaning. Further, at step 808 of the method 800, the system 100 generates a rewritten data conditioned on the target structure and the related semantics, after applying the plurality of transformation steps, using a T5-based architecture. Further, at step 810 of the method 800, the system 100 validates the generated rewritten data.

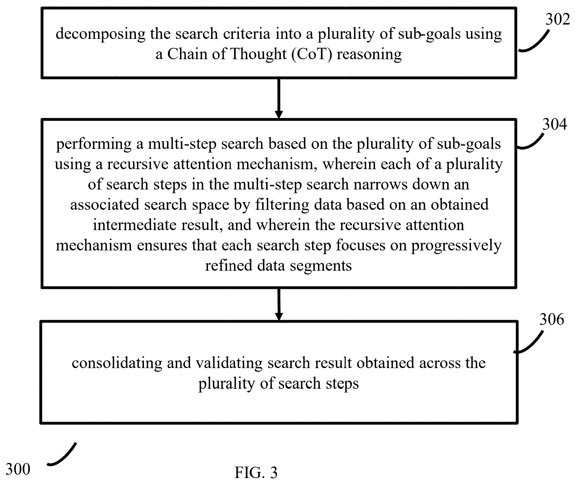

A search criteria based search maybe performed within the modified summarized information to obtain a required information. Various steps involved in the process of performing the search are depicted in method 300 in FIG. 3, and are explained hereafter. At step 302 of the method 300, the system 100 decomposes the search criteria into a plurality of sub-goals using the Chain of Thought (CoT) reasoning. Further, at step 304 of the method 300, the system 100 performs a multi-step search based on the plurality of sub-goals using a recursive attention mechanism. Each of a plurality of search steps in the multi-step search narrows down an associated search space by filtering data based on an obtained intermediate result, and wherein the recursive attention mechanism ensures that each search step focuses on progressively refined data segments. Further, at step 306 of the method 300, the system 100 consolidates and validates search result obtained across the plurality of search steps.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of cognitive transformation of data. The embodiment, thus provides a mechanism for cognitive transformation of data into human perceptions. Moreover, the embodiments herein further provide a mechanism for taking semantic integrity of data into consideration.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
obtaining (202), via one or more hardware processors, raw data as input,
wherein size of the raw data is limited to a pre-defined size limit;
merging (204), via the one or more hardware processors, the raw data with one or more additional data sources to obtain a merged dataset; and
processing (206), via the one or more hardware processors, the merged dataset, by:
identifying (206a) and filling missing data in the merged dataset to obtain an imputed dataset;
deriving (206b) at least a part of the imputed dataset as a relevant information, based on a defined criteria;
summarizing (206c) the relevant information to generate a summarized information;
pruning (206d) the summarized information to remove one or more redundant data present in the summarized information, wherein performing the pruning comprises reasoning through impact of removing one or more data points in the summarized information by simulating removal of each of the one or more data points and evaluating changes in remaining data's semantic integrity; and
modifying (206e) the summarized information after performing the pruning, to generate a modified summarized information, wherein modifying the summarized information comprises fitting a new set of requirements to adapt the summarized information for one or more applications.

2. The processor implemented method as claimed in claim 1, wherein a search criteria based search is performed within the modified summarized information to obtain a required information, comprising:
decomposing (302) the search criteria into a plurality of sub-goals using a Chain of Thought (CoT) reasoning;
performing (304) a multi-step search based on the plurality of sub-goals using a recursive attention mechanism, wherein each of a plurality of search steps in the multi-step search narrows down an associated search space by filtering data based on an obtained intermediate result, and wherein the recursive attention mechanism ensures that each search step focuses on progressively refined data segments; and
consolidating (306) and validating search result obtained across the plurality of search steps.

3. The processor implemented method as claimed in claim 1, wherein merging the raw data with one or more additional data sources to obtain the merged dataset comprises:
dividing (402) the raw data and data extracted from the one or more additional data sources into a first set of data chunks;
generating (404) a first set of context embeddings from the first set of data chunks;
combining data across the first set of context embeddings by a cross-attention mechanism to obtain a second set of context embeddings using a plurality of attention heads in a first transformer, wherein the first transformer focuses on a plurality of different semantic aspects of the first set of data chunks;
performing (406) a Chain of Thought (CoT) reasoning over the second set of context embeddings to obtain a third set of context embeddings, wherein the CoT reasoning refines one or more common themes in the second set of context embeddings;
penalizing (408) all inconsistencies, if found in the third set of context embeddings, by using a coherence modeling layer in the first transformer; and
obtaining (410) the merged dataset from an output layer of the first transformer using the third set of context embeddings.

4. The processor implemented method as claimed in claim 1, wherein identifying and filling the missing data comprises:
detecting (502) one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas;
generating (504) a plurality of hypotheses via a multi-pass attention mechanism, where each pass from among a plurality of passes in the multi-pass attention mechanism attempts to infer what is missing based on a plurality of different context slices;
selecting (506) a hypothesis among the plurality of hypotheses using a SoftMax layer, wherein the selected hypothesis has highest contextual relevance among the plurality of hypotheses; and
generating (508) the missing information using a generative model based on the selected hypothesis.

5. The processor implemented method as claimed in claim 1, wherein deriving at least the part of the imputed dataset as the relevant information comprising:
initializing (602) a guided attention based on the defined criteria; and
applying (604) a Chain of Thought (CoT) reasoning to decompose the defined criteria and derive the relevant information using a multi-stage forward pass through the attention mechanism, wherein each stage focuses on refining a specific aspect of the defined criteria, and wherein each pass generates an intermediate representation that influences a next stage.

6. The processor implemented method as claimed in claim 1, wherein summarizing the relevant information to generate the summarized information comprises:
compressing (702) the relevant information to maintain a plurality of key points by using a plurality of attention layers, wherein each layer focuses on a different level of abstraction;
generating (704) a step wise summary by a series of forward passes through the first transformer, with each pass focuses on retaining a plurality of critical points and discarding data classified as non-essential information;
checking (706) for coherence and completeness of the generated step wise summary; and
dynamically adjusting (708) length and detail level of the generated step wise summary based on one or more user input parameters.

7. The processor implemented method as claimed in claim 1, wherein modifying the summarized information comprises:
performing simultaneously (802), a structural analysis and a semantic analysis, of the summarized information to obtain a target structure and related semantics;
decomposing (804) the target structure and the related semantics into a plurality of transformation steps using a Chain of Thought (CoT) reasoning;
applying (806) the plurality of transformation steps on the summarized information, wherein at each step, it is assessed whether the transformed data aligns with the target structure while preserving a related original meaning;
generating (808) a rewritten data conditioned on the target structure and the related semantics, after applying the plurality of transformation steps, using a T5-based architecture; and
validating (810) the generated rewritten data.

8. A system, comprising:
one or more hardware processors (102);
a communication interface (112); and
a memory (104) storing a plurality of instructions, which when executed, cause the one or more hardware processors to:
obtain raw data as input, wherein size of the raw data is limited to a pre-defined size limit;
merge the raw data with one or more additional data sources to obtain a merged dataset; and
process the merged dataset, by:
identifying and filling missing data in the merged dataset to obtain an imputed dataset;
deriving at least a part of the imputed dataset as a relevant information, based on a defined criteria;
summarizing the relevant information to generate a summarized information;
pruning the summarized information to remove one or more redundant data present in the summarized information, wherein performing the pruning comprises reasoning through impact of removing one or more data points in the summarized information by simulating removal of each of the one or more data points and evaluating changes in remaining data's semantic integrity; and
modifying the summarized information after performing the pruning, to generate a modified summarized information, wherein modifying the summarized information comprises fitting a new set of requirements to adapt the summarized information for one or more applications.

9. The system as claimed in claim 8, wherein the one or more hardware processors are configured to perform a search criteria based search within the modified summarized information to obtain a required information, by:
decomposing the search criteria into a plurality of sub-goals using a Chain of Thought (CoT) reasoning;
performing a multi-step search based on the plurality of sub-goals using a recursive attention mechanism, wherein each of a plurality of search steps in the multi-step search narrows down an associated search space by filtering data based on an obtained intermediate result, and wherein the recursive attention mechanism ensures that each search step focuses on progressively refined data segments; and
consolidating and validating search result obtained across the plurality of search steps.

10. The system as claimed in claim 8, wherein the one or more hardware processors are configured to merge the raw data with one or more additional data sources to obtain the merged dataset, by:
dividing the raw data and data extracted from the one or more additional data sources into a first set of data chunks;
generating a first set of context embeddings from the first set of data chunks;
combining data across the first set of context embeddings by a cross-attention mechanism to obtain a second set of context embeddings using a plurality of attention heads in a first transformer, wherein the first transformer focuses on a plurality of different semantic aspects of the first set of data chunks;
Performing a Chain of Thought (CoT) reasoning over the second set of context embeddings to obtain a third set of context embeddings, wherein the CoT reasoning refines one or more common themes in the second set of context embeddings;
penalizing all inconsistencies, if found in the third set of context embeddings, by using a coherence modeling layer in the first transformer; and
obtaining the merged dataset from an output layer of the first transformer using the third set of context embeddings.

11. The system as claimed in claim 8, wherein the one or more hardware processors are configured to identify and fill the missing data by:
detecting one or more contextual gaps in the merged dataset using a plurality of Bi-directional Long Short Term Memory (LSTMs) followed by a second transformer encoder layer by comparing a plurality of token-level attention weights across a sequence to detect one or more low-confidence areas;
generating a plurality of hypotheses via a multi-pass attention mechanism, where each pass from among a plurality of passes in the multi-pass attention mechanism attempts to infer what is missing based on a plurality of different context slices;
selecting a hypothesis among the plurality of hypotheses using a SoftMax layer, wherein the selected hypothesis has highest contextual relevance among the plurality of hypotheses; and
generating the missing information using a generative model based on the selected hypothesis.

12. The system as claimed in claim 8, wherein the one or more hardware processors are configured to derive at least the part of the imputed dataset as the relevant information, by:
initializing a guided attention based on the defined criteria;
applying a Chain of Thought (CoT) reasoning to decompose the defined criteria and derive the relevant information using a multi-stage forward pass through the attention mechanism, wherein each stage focuses on refining a specific aspect of the defined criteria, and wherein each pass generates an intermediate representation that influences a next stage.

13. The system as claimed in claim 8, wherein the one or more hardware processors are configured to summarize the relevant information to generate the summarized information, by:
compressing the relevant information to maintain a plurality of key points by using a plurality of attention layers, wherein each layer focuses on a different level of abstraction;
generating a step wise summary by a series of forward passes through the first transformer, with each pass focuses on retaining a plurality of critical points and discarding data classified as non-essential information;
checking for coherence and completeness of the generated step wise summary; and
dynamically adjusting length and detail level of the generated step wise summary based on one or more user input parameters.

14. The system as claimed in claim 8, wherein the one or more hardware processors are configured to modify the summarized information, by:
performing simultaneously, a structural analysis and a semantic analysis, of the summarized information to obtain a target structure and related semantics;
decomposing the target structure and the related semantics into a plurality of transformation steps using a Chain of Thought (CoT) reasoning;
applying the plurality of transformation steps on the summarized information, wherein at each step, it is assessed whether the transformed data aligns with the target structure while preserving a related original meaning;
generating a rewritten data conditioned on the target structure and the related semantics, after applying the plurality of transformation steps, using a T5-based architecture; and
validating the generated rewritten data.

15. One or more non-transitory machine-readable information storage mediums comprising one or more instructions which when executed by one or more hardware processors cause:
obtaining raw data as input, wherein size of the raw data is limited to a pre-defined size limit;
merging the raw data with one or more additional data sources to obtain a merged dataset; and
processing the merged dataset, by:
identifying and filling missing data in the merged dataset to obtain an imputed dataset;
deriving at least a part of the imputed dataset as a relevant information, based on a defined criteria;
summarizing the relevant information to generate a summarized information;
pruning the summarized information to remove one or more redundant data present in the summarized information, wherein performing the pruning comprises reasoning through impact of removing one or more data points in the summarized information by simulating removal of each of the one or more data points and evaluating changes in remaining data's semantic integrity; and
modifying the summarized information after performing the pruning, to generate a modified summarized information, wherein modifying the summarized information comprises fitting a new set of requirements to adapt the summarized information for one or more applications.
